(19) Europäisches Patentamt
European Patent Office
Office européen des brevets

(11) **EP 3 009 813 B1**

(12) **EUROPÄISCHE PATENTSCHRIFT**

(45) Veröffentlichungstag und Bekanntmachung des Hinweises auf die Patenterteilung:
**17.06.2020   Patentblatt 2020/25**

(51) Int Cl.:
*G01F 23/296* (2006.01)    *G01F 23/00* (2006.01)
*G01N 9/00* (2006.01)

(21) Anmeldenummer: **15185571.5**

(22) Anmeldetag: **17.09.2015**

(54) **VIBRONISCHER SENSOR**

VIBRONIC SENSOR

CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2014   DE 102014114943**

(43) Veröffentlichungstag der Anmeldung:
**20.04.2016   Patentblatt 2016/16**

(73) Patentinhaber: **Endress+Hauser SE+Co. KG 79689 Maulburg (DE)**

(72) Erfinder:
• **Brengartner, Tobias**
  **79312 Emmendingen (DE)**
• **Gersbacher, Lukas**
  **79669 Zell i. W. (DE)**

(74) Vertreter: **Andres, Angelika Maria**
  **Endress+Hauser (Deutschland) AG+Co. KG**
  **PatServe**
  **Colmarer Strasse 6**
  **79576 Weil am Rhein (DE)**

(56) Entgegenhaltungen:
DE-A1-102009 028 022     DE-T2- 69 723 706

**Beschreibung**

Die Erfindung betrifft ein Verfahren und eine Vorrichtung zur Überwachung mindestens einer Prozessgröße eines Mediums mit zumindest einer schwingfähigen Einheit.

Derartige auch als vibronische Sensoren bezeichnete Vorrichtungen weisen im Falle von Füllstandsmessgeräten als schwingfähige Einheit beispielsweise eine Schwinggabel, einen Einstab oder eine Membran auf. Diese wird im Betrieb mittels einer elektromechanischen Wandlereinheit zu mechanischen Schwingungen angeregt, welche wiederum beispielsweise ein piezoelektrischer Antrieb oder ein elektromagnetischer Antrieb sein kann. Die schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät. Es versteht sich von selbst, dass neben den genannten Beispielen für eine schwingfähige Einheit und eine elektromechanische Wandlereinheit auch weitere Möglichkeiten vorhanden sind, welche ebenfalls unter die vorliegende Erfindung fallen.

Entsprechende Feldgeräte werden von der Anmelderin in großer Vielfalt hergestellt und im Falle von Füllstandsmessgeräten beispielsweise unter der Bezeichnung LIQUIFANT und/oder SOLIPHANT vertrieben. Die zugrundeliegenden Messprinzipien sind im Prinzip aus einer Vielzahl von Veröffentlichungen bekannt. Die Anregung der schwingfähigen Einheit zu mechanischen Schwingungen mittels der elektromechanischen Wandlereinheit erfolgt zumeist über einen analogen elektrischen Schwingkreis. Die elektromechanische Wandlereinheit regt die schwingfähige Einheit mittels eines elektrischen Anregesignals zu mechanischen Schwingungen an. Umgekehrt kann die elektromechanische Wandlereinheit die mechanischen Schwingungen der schwingfähigen Einheit empfangen und in ein elektrisches Empfangssignal umwandeln. Die elektromechanische Wandlereinheit umfasst entsprechend entweder eine separate Antriebseinheit und eine separate Empfangseinheit, oder eine kombinierte Antriebs-/Empfangseinheit.

Dabei ist die Antriebs-/Empfangseinheit Teil eines in einer Elektronikeinheit integrierten Regelkreises, welcher das Anregesignal derart einstellt, dass zwischen dem Anregesignal und Empfangssignal eine vorgebbare Phasenverschiebung vorliegt. Beispielsweise muss für eine resonante Schwingung die Schwingkreisbedingung, gemäß welcher alle im Schwingkreis auftretenden Phasen ein Vielfaches von 360° ergeben, erfüllt sein.

Sowohl das Anregesignal als auch das Empfangssignal sind charakterisiert durch ihre Frequenz, Amplitude und/oder Phase. Entsprechend werden Änderungen in diesen Größen üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur bei einer zumindest teilweisen Bedeckung mit dem Medium ermitteln.

Im Stand der Technik sind dabei sowohl analoge als auch digitale Verfahren zur Anregung der schwingfähigen Einheit bekannt geworden, wobei sich die digitale Anregung durch ihre universelleren Einsatzmöglichkeiten auszeichnet. Allerdings geht diese nachteilig oftmals wiederum durch eine deutlich höhere Leistungsaufnahme für das jeweilige Messgerät einher. Deshalb wäre ein digitales Anregungsverfahren mit einer geringen Leistungsaufnahme wünschenswert.

In der DE102009026685A1 ist beispielsweise ein Verfahren zur digital gesteuerten Anregung eines vibronischen Sensors bekannt geworden, welches auf einer Zwangsanregung mit einer bestimmten Frequenz beruht. Um für das Anregesignal die Anregefrequenz zu finden, bei welcher die vorgebbare Phasenverschiebung vorliegt, wird ein Frequenzsweep durchgeführt und die der vorgebbaren Phasenverschiebung entsprechende Frequenz ermittelt. Eine vorteilhafte Weiterbildung dieses Verfahrens ist Gegenstand der DE102009028022A1, in welcher die Auswertung des Empfangssignals dadurch vereinfacht wird, dass das Empfangssignal phasenselektiv nur zu bestimmten Zeitpunkten abgetastet und ausgewertet wird. Eine weitere Weiterentwicklung ist in der DE1020110075113A1 beschrieben und liegt darin, zwei Frequenzsweeps in unterschiedlicher Laufrichtung mit anschließender Mittelwertbildung vorzunehmen, um die Messgenauigkeit zu erhöhen. Allerdings eignen sich Messgeräte, welche zur Ausführung der genannten Verfahren ausgebildet sind, nicht ohne weiteres zum Betreiben des Messgerätes über eine 4-20mA Schnittstelle oder eine NAMUR Schnittstelle.

Eine weitere digitale Möglichkeit, für einen vibronischen Sensor die Phasenverschiebung zwischen Anregesignal und Empfangssignal auf einen vorgebbaren Wert zu regeln, ist in der DE00102010030982A1 offenbart. Das dort beschriebene Verfahren basiert auf dem Funktionsprinzip einer Phasenregelschleife (engl. Phase-Locked-Loop, PLL) und ist bereits auf eine Reduzierung der Leistungsaufnahme hin optimiert. Für eine derartige Anordnung wird zumindest ein Phasendetektor benötigt, welcher einen entscheidenden Einfluss auf die Robustheit wie auch auf die Genauigkeit des Regelkreises nimmt. Damit die Auswertung stabil erfolgen kann, muss zudem gewährleistet sein, dass die Amplitude des Anregesignals auf einen konstanten Wert gehalten wird. Dies ist in der Praxis jedoch vergleichsweise aufwendig.

Der vorliegenden Erfindung liegt die Aufgabe zugrunde, ein Verfahren und eine Vorrichtung bereitzustellen, die es ermöglichen, die Phasenverschiebung zwischen Anregesignal und Empfangssignal bei geringem Stromverbrauch zuverlässig und einfach auf einen vorgebbaren Wert einzustellen.

Die Aufgabe wird erfindungsgemäß gelöst durch ein Verfahren zur Bestimmung und/oder Überwachung mindestens einer Prozessgröße eines Mediums mit zumindest einer schwingfähigen Einheit,

wobei die schwingfähige Einheit mittels eines elektrischen Anregesignals einer einstellbaren Frequenz zu mechanischen Schwingungen angeregt wird,

wobei die mechanischen Schwingungen in ein elektrisches Empfangssignal umgewandelt werden, welches Empfangssignal zumindest durch eine Frequenz und/oder eine Phase und/oder eine Amplitude charakterisiert ist,

wobei das Anregesignal ausgehend vom Empfangssignal erzeugt wird,

wobei die Spannungswerte des Empfangssignals zu bestimmten vorgegebenen Zeitpunkten ausgehend vom Anregesignal abgetastet werden, wobei aus den abgetasteten Spannungswerten des Empfangssignals mittels eines Goertzel Algorithmus der Realteil und Imaginärteil des Empfangssignals ermittelt werden,

wobei für die Durchführung des Goertzel Algorithmus zumindest ein Goertzel Koeffizient, insbesondere die Anzahl der Abtastwerte und/oder eine Arbeitsfrequenz und/oder eine Abtastfrequenz vorgegeben wird,

wobei aus dem Realteil und Imaginärteil des Empfangssignals zumindest die aktuelle Phase und/oder die aktuelle Amplitude des Empfangssignals errechnet werden,

wobei die Frequenz des Anregesignals derart eingestellt wird, dass eine vorgebbare Phasenverschiebung zwischen Anregesignal und Empfangssignal vorliegt, und

wobei die mindestens eine Prozessgröße bestimmt wird.

Der Goertzel-Algorithmus findet seinen Ursprung in der diskreten Fourier Transformation (DFT). Üblicherweise wird zur Frequenzanalyse eine Fast Fourier Transformation (FFT), eine bedeutende Vereinfachung der DFT, verwendet, wie beispielsweise in den Druckschriften DE10201101667A1 oder DE10203461A1 beschrieben, welche sich beide mit vibronischen Sensoren beschäftigen. Aber auch in anderen Bereichen der Prozesstechnik wird vielfach eine FFT angewendet, wie zum Beispiel in den Schriften DE69730416T2 oder DE102004030740A1. Anstelle einer FFT nun den Goertzel-Algorithmus zu verwenden, ist durch folgenden Zusammenhang motiviert:

Der Goertzel-Algorithmus stellt grundsätzlich eine erneute Vereinfachung gegenüber einer FFT dar, wenn man die DFT eines Signals lediglich für eine oder einige wenige Spektralkomponenten k betrachten möchte. Der Goertzel-Algorithmus liefert nämlich als Ausgangsabtastwerte die diskreten Fourier Koeffizienten zu einer bestimmten Frequenz. Seine Anwendung macht entsprechend nur dann Sinn, wenn man den Frequenzbereich für das jeweilige Signal genau kennt.

Eine Anwendung des Goertzel-Algorithmus innerhalb der Prozessmesstechnik ist aus der DE69723706T2 bekannt geworden. Beschrieben ist ein Coriolis-Durchflussmessgerät mit integrierter Druckmessung. Es werden jeweils zwei unterschiedliche Schwingungstypen der Durchflussröhren angeregt, welche jeweils durch eine fundamentale Frequenz gekennzeichnet sind, und aus welchen sich der Durchfluss ermitteln lässt. Das Verhältnis der beiden Frequenzen ist wiederum abhängig vom Druck. Das verwendete Signalverarbeitungsverfahren umfasst ein Frequenz/Phasen-Berechnungselement, welches den Görtzel-Algorithmus zur Ermittlung der fundamentalen Frequenzen des jeweiligen Schwingungstypen ausnutzt.

Im Falle einer Zwangsanregung eines vibronischen Sensors ist das Anregesignal bekannt und das Empfangssignal wird wiederum in Bezug auf die Frequenz des Anregesignals ausgewertet. Durch geschickte Kombination der einzelnen Bestandteile des Schwingkreises und/oder Regelkreises und durch geschickte Wahl der jeweiligen Parameter für den Goertzel-Algorithmus, der sogenannten Goertzel-Koeffizienten, kann deshalb dessen Verwendung anstelle einer FFT vorteilhaft sein. Durch ein entsprechendes Auswerteverfahren wird dann die Anzahl der notwendigen Rechenoperationen deutlich reduziert.

Durch die Anwendung des Goertzel-Algorithmus kann schließlich die Leistungsaufnahme für ein entsprechend ausgestaltetes Messgerät deutlich geringer werden, was insbesondere für die Implementierung von 4-20mA Schnittstellen oder NAMUR Schnittstellen und/oder die Verwendung des Messgeräts in einer explosionsgefährdeten Atmosphäre vorteilhaft ist.

Die Goertzel-Koeffizienten sind dabei gegeben durch die Anzahl der Abtastwerte N, die zu betrachtende Spektralkomponente $f_k$, welches die Arbeitsfrequenz des Goertzel-Algorithmus darstellt, und die Abtastfrequenz fs, welche gegeben ist durch das Inverse der Abtastrate $T_s$. Aus diesen Werten ergibt sich zusätzlich das sogenannte Goertzelfenster, welches sich aus dem Produkt der Anzahl der Abtastwerte N und dem Abtastintervall T bestimmt und entsprechend ein Maß für die Frequenzauflösung ist. Bei der Wahl der Goertzel-Koeffizienten sollten bestimmte Bedingungen eingehalten werden, um eine möglichst genaue Auswertung zu erhalten.

Die Goertzel-Koeffizienten hängen über die Gleichung

$$f_k = k\frac{f_s}{N}$$

zusammen. Normalerweise wird zuerst eine Abtastfrequenz $f_s$ definiert, und anschließend der Faktor k bestimmt, so dass die Arbeitsfrequenz $f_k$ dem Anregesignal entspricht.

Es ist aber insbesondere bei einem vibronischen Sensor, bei welchem das Anregesignal bekannt ist, von Vorteil, wenn die Arbeitsfrequenz auf die Frequenz des Anregesignals eingestellt wird. Dieses Vorgehen hat zur Folge, dass anstelle des Faktors k die Abtastfrequenz $f_S$ stetig angepasst wird.

Weiterhin ist es von Vorteil, wenn die Abtastfrequenz auf ein ganzzahliges Vielfaches n der Frequenz des Anregesignals eingestellt wird. Dies kann zu einer Vereinfachung des Rechenaufwands für den Goertzel-Algorithmus führen. Insbesondere ergibt sich, wenn zusätzlich die Arbeitsfrequenz auf die Frequenz des Anregesignals eingestellt wird für den Faktor k der Zusammenhang $k = \frac{N}{n}$.

Es ist außerdem von Vorteil, wenn für die Anzahl der Abtastwerte ein ganzzahliges Vielfaches einer Periode des Anregesignals gewählt wird. Auf diese Weise können sogenannte Abschneidefehler, oder auch Latchup-Effekte, vermieden werden.

Eine weitere und deutliche Reduzierung des Rechenaufwandes und entsprechend der Leistungsaufnahme für ein entsprechendes Messgerät kann durch geeignete und geschickte Aufstellung weiterer Bedingungen für die jeweiligen Goertzel-Koeffizienten erreicht werden.

In einer besonders bevorzugten Ausgestaltung wird als Abtastfrequenz das Zweifache oder das Vierfache der Frequenz des Anregesignals eingestellt. Diese Wahl ist besonders vorteilhaft. Sie bewirkt nämlich, dass sich rechenaufwendige an sich trigonometrische Terme innerhalb des Algorithmus zu konstanten Werten vereinfachen.

In einer bevorzugten Ausgestaltung wird der Goertzel-Algorithmus über mehrere Perioden des Anregesignals durchgeführt wird. Umso mehr Perioden durchlaufen werden, umso robuster erfolgt die Amplituden- und/oder Phasendetektion.

Weiterhin ist es von Vorteil, wenn das Anregesignal ein Rechtecksignal oder ein Sinussignal ist.

Es sind ferner Maßnahmen erforderlich, mit welchen die vorgebbare Phasenverschiebung zwischen Anrege- und Empfangssignal eingestellt werden kann. Beide Signale zeigen ein zeitlich periodisches Verhalten, welches zur Einstellung einer vorgebbaren Phasenverschiebung ausgenutzt werden kann.

Entsprechend wird in einer besonders bevorzugten Ausgestaltung die vorgebbare Phasenverschiebung anhand des Quotienten aus der Anzahl der Abtastwerte und der Abtastfrequenz mittels einer zeitlichen Verschiebung in Bezug auf das Anregesignal eingestellt. Die Phasenverschiebung wird also über eine Einstellung des Goertzel-Fensters in Bezug auf das Anregesignal generiert.

Dabei ist es von Vorteil, wenn die vorgebbare Phasenverschiebung 90° beträgt. Auf diese Weise erfolgt eine resonante Anregung unter Erfüllung der Schwingkreisbedingung.

In einer weiteren bevorzugten Ausführung wird eine Messperiode zumindest in zwei Zeitintervalle unterteilt wird, wobei jeweils in einem ersten Zeitintervall eine erste vorgebbare Phasenverschiebung eingestellt wird, und in einem zweiten Zeitintervall eine zweite vorgebbare Phasenverschiebung eingestellt wird. Dieses Vorgehen ist von Vorteil für die Bestimmung der Viskosität des Mediums. Dafür wird nämlich das Empfangssignal in Bezug auf unterschiedliche Phasenverschiebungen in Bezug auf das Anregesignal ausgewertet.

In einer weiteren bevorzugten Ausgestaltung wird zur Einstellung der vorgebbare Phasenverschiebung eine durch den Quotienten des Realteils und des Betrags Imaginärteils des Empfangssignals definierte Funktion oder das Inverse dieser Funktion für die Regelabweichung verwendet. Dies stellt eine Vereinfachung der Berechnung der aktuellen Phasenverschiebung gegenüber dem mathematisch exakten Verfahren dar.

Dabei ist es von Vorteil, wenn die Regelabweichung beschränkt wird, insbesondere auf +/-1.

Die erfindungsgemäße Aufgabe wird ferner gelöst durch eine Vorrichtung zur Bestimmung und/oder Überwachung mindestens einer Prozessgröße eines Mediums mit zumindest einer schwingfähigen Einheit,

mit einer elektromechanischen Wandlereinheit welche dazu ausgestaltet ist, die mechanisch schwingfähige Einheit ausgehend von einem elektrischen Anregesignal einer einstellbaren Frequenz zu mechanischen Schwingungen anzuregen,

und die mechanischen Schwingungen zu empfangen und in ein elektrisches Empfangssignal umzuwandeln, welches Empfangssignal zumindest durch eine Frequenz und/oder eine Phase und/oder eine Amplitude charakterisiert ist,

und mit einer Elektronikeinheit mit einem Mikroprozessor, welche dazu ausgestaltet ist,

dass sie ausgehend vom Empfangssignal das elektrische Anregesignal erzeugt,

dass sie die Spannungswerte des Empfangssignals zu bestimmten vorgegebenen Zeitpunkten abtastet,

dass sie aus den abgetasteten Spannungswerten des Empfangssignals mittels eines Goertzel Algorithmus der Realteil und Imaginärteil des Empfangssignals ermittelt, wobei für die Durchführung des Goertzel Algorithmus zumindest ein Goertzel Koeffizient, insbesondere die Anzahl der Abtastwerte und/oder eine Arbeitsfrequenz und/oder eine Abtastfrequenz vorgegeben ist,

dass sie aus dem Realteil und Imaginärteil des Empfangssignals zumindest die aktuelle Phase und/oder die aktuelle Amplitude des Empfangssignals errechnet,

und mit einer Regeleinheit, die dazu ausgestaltet ist, die Frequenz des Anregesignals derart einzustellen, dass eine vorgebbare Phasenverschiebung zwischen Anregesignal und Empfangssignal vorliegt, und welche Elektronikeinheit dazu ausgestaltet ist, die mindestens eine Prozessgröße zu bestimmen.

Die erfindungsgemäße Vorrichtung ist also derart ausgestaltet, dass sie zur Durchführung des erfindungsgemäßen Verfahrens geeignet ist.

In einer besonders bevorzugten Ausgestaltung ist der Mikroprozessor ein Low-Power Mikroprozessor. So kann die Leistungsaufnahme durch die Elektronikeinheit in Bezug auf eine zentrale Recheneinheit minimiert werden. Insbesondere die Kombination eines entsprechenden Low-Power Mikroprozessors mit einem Goertzel-Algorithmus, bei welchem die Abtastfrequenz auf das Zweifache oder das Vierfache der Frequenz des Anregesignals eingestellt wird erlaubt erstmalig die Implementierung einer NAMUR Schnittstelle für ein entsprechendes Feldgerät.

In einer weiteren besonders bevorzugten Ausgestaltung ist ein Anti-Aliasingfilter, insbesondere ein adaptiver Switched-Capacitor- Filter, vorgesehen. Diesem Filter kommt hier eine besondere Funktion zu. Gemäß dem sogenannten Nyquist-Shannon-Abtasttheorem sollte die Abtastfrequenz so gewählt werden, dass $f_S > 2f_a$ gilt, wobei $f_a$ dem Signal mit der größten Spektralkomponente k entspricht. Eine zu geringe Abtastfrequenz fs hat nachteilig zur Folge, dass hochfrequente Anteile des Anregesignals als niederfrequent interpretiert werden, was auch als Alias-Effekt bezeichnet wird. Eine zu hohe Abtastrate dagegen führt zu großen Datenmengen und einer großen Zahl an notwendigen Rechenoperationen. In Bezug auf die Leistungsaufnahme ist also eine geringere Abtastfrequenz fs vorteilhaft. Entsprechend ist es also von Vorteil, einen Anti-Aliasingfilter zu verwenden. Dieser verbessert zum einen die Robustheit des Regelkreises und zum anderen unterdrückt er die jeweiligen durch Wahl einer niedrigen Abtastrate zustande kommenden Störsignale. Da die Abtastfrequenz in derselben Größenordnung liegt wie die Anregungsfrequenz, und weil die Detektion der Phasenverschiebung durch den Filter nicht beeinflusst werden darf, ist ein adaptiver Switched-Capacitor Filter besonders geeignet. Dieser erlaubt eine gute Unterdrückung der Störfrequenzen ohne die Detektion der Phase zu beeinflussen. Durch geeignete Anpassung der Arbeitsfrequenz des Switched-Capacitor Filters kann dann das Nyquist-Shannon-Abtasttheorem eingehalten werden. Die Integration des SC-Filters ist also insbesondere auch in Bezug auf eine geringe Leistungsaufnahme vorteilhaft, da durch den Filter eine hohe Genauigkeit erreicht werden kann, auch wenn die Abtastfrequenz auf das Zweifache oder Vierfache der Frequenz des Anregesignals eingestellt wird.

Neben den durch die Wahl einer niedrigen Abtastrate zustande kommenden Störsignalen liefert der Switched-Capacitor Filter allgemein eine sehr gute Störsignalunterdrückung und stellt eine kostengünstige Realisierung derselben dar. Dies ist auch in der DE00102010028303A1 beschrieben.

In einer bevorzugten Ausgestaltung ist die mindestens eine Prozessgröße gegeben durch den Füllstand, die Dichte oder die Dichte des Mediums in einem Behälter oder durch den Durchfluss des Mediums durch ein Rohr.

In einer weiteren bevorzugten Ausgestaltung ist eine elektromechanische Wandlereinheit vorgesehen, welche dazu ausgestaltet ist, die schwingfähige Einheit zu mechanischen Schwingungen anzuregen. Dabei ist es von Vorteil, wenn die elektromechanische Wandlereinheit gegeben ist durch einen piezoelektrischen Antrieb oder einen elektromagnetischen Antrieb.

Die Erfindung sowie ihre vorteilhaften Ausgestaltungen werden nachfolgend anhand der Figuren Fig. 1 - Fig. 5 näher beschrieben. Es zeigt:

Fig. 1: eine schematische Skizze eines vibronischen Sensors gemäß Stand der Technik,

Fig. 2: ein Blockschaltbild einer erfindungsgemäßen Elektronikeinheit,

Fig. 3: einen schematischen Verlauf des Anregesignals (a) und Empfangssignals (b),

Fig. 4: eine schematische Zeichnung des Verlaufs der vereinfachten Regelfunktion, und

Fig. 5: eine Illustrierung zur Einstellung der vorgebbaren Phasenverschiebung.

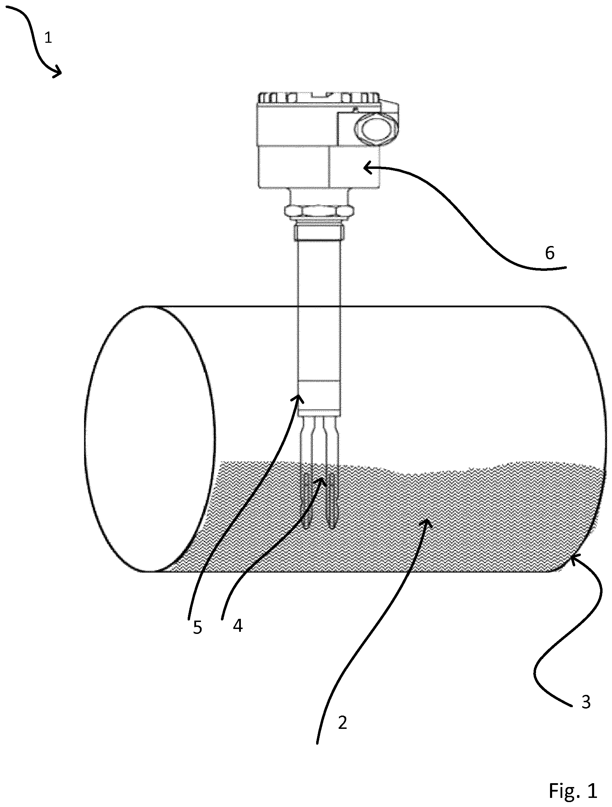

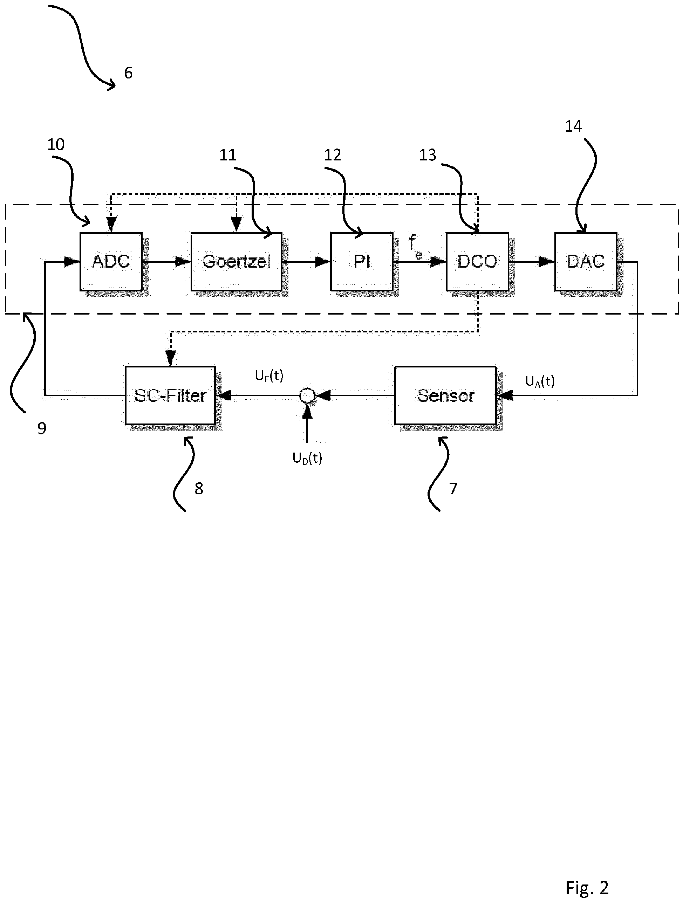

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der elektromechanischen Wandlereinheit 5 zu mechanischen Schwingungen angeregt, und kann beispielsweise ein piezoelektrische Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalauswertung und/oder-speisung erfolgt. Ein Blockschaltbild der notwendigen Komponenten einer erfindungsgemäßen Elektronikeinheit ist Gegenstand von Fig. 2.

Das Sensorelement 7 bestehend aus der schwingfähigen Einheit 4 und der elektromechanischen Wandlereinheit 5 aus Fig. 1 wird mit einem Anregesignal $U_A$ beaufschlagt. Umgekehrt erzeugt die elektromechanische Wandlereinheit 5 aus den mechanischen Schwingungen ein elektrisches Empfangssignal $U_E$, welchem Störsignale $U_D$ überlagert sein können, welche mittels eines adaptiven Switched-Capacitor (SC)- Filters 8 herausgefiltert werden. Dieser dient als Antialiasing-Filter und ist aufgrund der Anforderungen an die Leistungsaufnahme eines entsprechenden Messgeräts besonders geeignet. Weiterhin erlaubt seine adaptive Funktionalität dem bekannten Anregesignal zu folgen.

Das gefilterte Empfangssignal durchläuft innerhalb des Mikroprozessors 9, insbesondere eines Low-Power Mikroprozessor, zuerst einen Anaolg-Digital-Wandler (ADC) 10 und wird anschließend mittels eines Goertzel-Algorithmus 11 in Bezug auf seine Phase $\varphi_A$ und Amplitude $A_A$ ausgewertet. Die Frequenz des Empfangssignals wird mittels eines PI-Reglers 12 so eingestellt, dass zwischen dem Anrege- und Empfangssignal eine vorgebbare Phasenverschiebung $\Delta\varphi$ vorliegt. Schließlich wird mittels eines digital gesteuerten Oszillators (DCO) das Anregesignal generiert, welches einen Digital-Analog-Wandler (DAC) 13 durchläuft und erneut zur Beaufschlagung des Sensorelements 7 dient.

Der Goertzel-Algorithmus ist an sich bekannt und beispielsweise in "Digitale Signalverabeitung" von D. Ch. Von Grüningen, in 3. Auflage erschienen im Fachbuchverlag Leipzig im Jahr 2004, beschrieben.

Die Übertragungsfunktion $H_k(z)$ für einen Goertzel-Algorithmus zweiter Ordnung ist gegeben durch

$$H_k(z) = \frac{1 - W_N^k z^{-1}}{1 - a\,z^{-1} + z^{-2}}$$

mit $W_N = e^{\frac{-j2\pi}{N}}$ und $a = 2\cos(^{k2\pi}/_N)$. Der Goertzel-Algorithmus besteht entsprechend aus einem rekursiven und einem nichtrekursiven Zweig. Der rekursive Zweig stellt einen Resonator dar, den alle abgetasteten Werte durchlaufen, während nach N Abtastwerten einmalig der nichtrekursive Zweig durchlaufen wird, und als Ergebnis den Realteil und Imaginärteil des Anregesignals liefert, aus welchem die jeweiligen Größen über weitere mathematische Relationen berechnet werden können. Aus diesem Grund kann der Goertzel-Algorithmus auch als dezimierendes Digitalfilter angesehen werden, welches nach N Abtastwerten einen Ausgangswert liefert, welcher dem DFT Koeffizienten an der Stelle k entspricht. Nach der Berechnung des jeweiligen Ausgangswertes werden die Anfangsbedingungen jeweils wieder auf Null gesetzt und eine weitere Berechnung kann gestartet werden. Da der rekursive Zweig eine Resonatorstruktur beschreibt, wird die Arbeitsfrequenz des Goertzel-Algorithmus auch häufig als Resonanzfrequenz bezeichnet.

In der Praxis wird normalerweise so vorgegangen, dass zuerst die Abtastfrequenz $f_S$ definiert, und anschließend über die Gleichung

$$f_k = k\frac{f_S}{N}$$

anschließend der Faktor k bestimmt wird, so dass die Arbeitsfrequenz $f_k$ dem Anregesignal entspricht. Ist k eine ganze Zahl, so spricht man vom normalen Goertzel-Algorithmus und bei einem reellen k vom sogenannten generalisierten Goertzel-Algorithmus.

Eine speziell mit Hinblick auf ein zwangsangeregtes System und mit Hinblick auf eine geringe Leistungsaufnahme optimierter Goertzel-Algorithmus ist in Fig. 2 illustriert, ebenfalls in Form eines Blockschaltbildes. Die notwendigen Maßnahmen zur Optimierung basieren auf einer intelligenten Wahl der Abtastfrequenz und Anzahl der Abtastwerte. Da bei einer Zwangsanregung, wie für vibronische Sensoren üblich, das Anregesignal bekannt ist, und weil das Empfangssignal in Bezug auf die Frequenz des Anregesignals ausgewertet wird, kann die Abtastrate $T_S$ intelligent gewählt werden. Dann ist das Goertzel-Fenster sowie die Lage der Abtastwerte N direkt mit dem Anregesignal gekoppelt. Dies hat zur Folge, dass anstelle des Faktors k die Abtastfrequenz ständig derart angepasst wird, dass die Arbeitsfrequenz des Goertzel-Algorithmus auf die Signalfrequenz angepasst wird.

Bei einer geeigneten Wahl der Abtastfrequenz vereinfachen sich die notwendigen Rechenoperationen des Goertzel-Algorithmus erheblich. Dazu wird die Abtastfrequenz so gewählt, dass sie ein ganzzahliges Vielfaches der Anregungsfrequenz $f_{An}$ beträgt:

$$f_S = n f_{An}.$$

Dadurch ergibt sich für die Arbeitsfrequenz $f_k$

$$f_k = k\frac{n f_{An}}{N}$$

und unter Berücksichtigung der Bedingung $f_k = f_{An}$

$$k = \frac{N}{n}.$$

Wird nun insbesondere n=4 gewählt, was in Bezug auf das Anregesignal einer vierfach höheren Abtastfrequenz entspricht, ergibt sich eine entscheidende Vereinfachung für die jeweils durchzuführenden Rechenoperationen. Die trigonometrischen Terme a werden nämlich zu einer Konstante. Entsprechend laufen im rekursiven Zweig im Gegensatz zum allgemeinen Goertzel-Algorithmus lediglich Additionen und Subtraktionen ab, was wiederum einen entscheidenden Vorteil für die Implementierung des Algorithmus auf einem Low-Power Mikrocontroller hat. Insbesondere entstehen bei ganzzahligen Eingangswerten ausschließlich ganzzahlige Ausgangswerte. Da im ADC Integerwerte generiert werden, muss in diesem Fall schließlich keine Fixed-Point Arithmetik ge-

Der Realteil und der Imaginärteil des Anregesignals können mittels des optimierten Goertzel-Algorithmus direkt nach N-1 Abtastwerten abgegriffen werden.

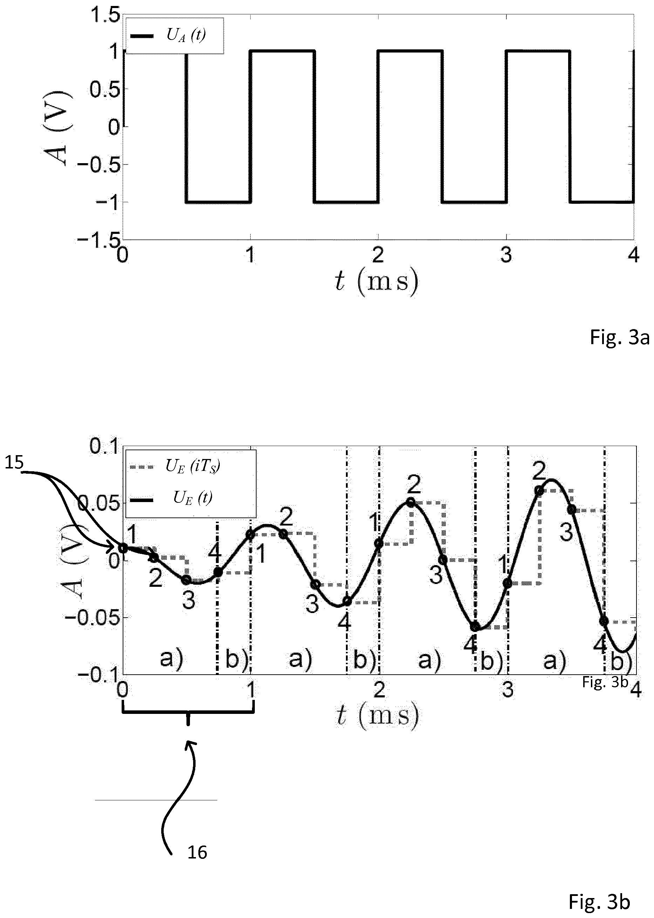

In Fig. 3 ist schematisch der Verlauf eines Anregesignal (a) sowie eines abgetasteten Empfangssignals (b) gezeigt. Das Anregesignal in Fig. 3a) ist gegeben durch ein zeitlich periodisches Rechtecksignal. Anhand des Anregesignals werden sowohl die Abtastzeitpunkte als auch die relative Lage des Goertzel-Fensters definiert. Das Empfangssignal, welches in diesem Falle durch ein Sinus-Signal gegeben ist, ist in Fig. 3b) gezeigt

Für dieses Beispiel beträgt die Länge des Goertzel-Fensters 16 exakt eine Signalperiode des Anregesignals und es wurde für die Anzahl der Abtastwerte 15 N=4 gewählt, da diese Wahl eine besonders vorteilhaft in Bezug auf eine Reduzierung des Rechenaufwandes ist. Es versteht sich jedoch von selbst, dass die Länge des Goertzel-Fensters 16 auch ein anderes ganzzahliges Vielfaches der Signalperiode des Anregesignals betragen kann. Generell gilt, dass je mehr Perioden den rekursiven Zweig des Goertzel-Algorithmus durchlaufen, desto schmalbandiger wird das Verhalten der Resonatorstruktur und desto robuster erfolgt die Phasen- und/oder Amplitudendetektion. Auf der anderen Seite sinkt die Geschwindigkeit der Phasen- und/oder Amplitudendetektion mit wachsender Anzahl der durchlaufenen Perioden.

In Fig. 3b ist die zeitliche Abfolge des rekursiven (a) und nicht rekursiven (b) Zweigs des Goertzel Algorithmus, eingezeichnet. Bei einer Länge des Goertzel-Fenster, welche N Abtastwerten entspricht, durchlaufen N-1 Werte den rekursiven Zweig (a), wobei nach den N-1 Werten einmalig der nicht-rekursive Zweig (b) durchlaufen und der Real- und Imaginärteil berechnet werden, aus welchem wiederum die Phasen- und/oder Amplitudeninformationen errechnet werden können. Dabei gilt:

$$\Phi(iT_S) = \arctan\left(\frac{Im(iT_S)}{Re(iT_S)}\right),$$

$$A(iT_S) = \frac{2}{N}\sqrt{Im(iT_S)^2 + Re(iT_S)^2}$$

Dabei muss die Phase je nach Vorzeichen des Realteils und/oder Imaginärteils korrigiert werden. Zum Schluss wird der Goertzel-Algorithmus wieder auf die Anfangsbedingungen zurückgesetzt.

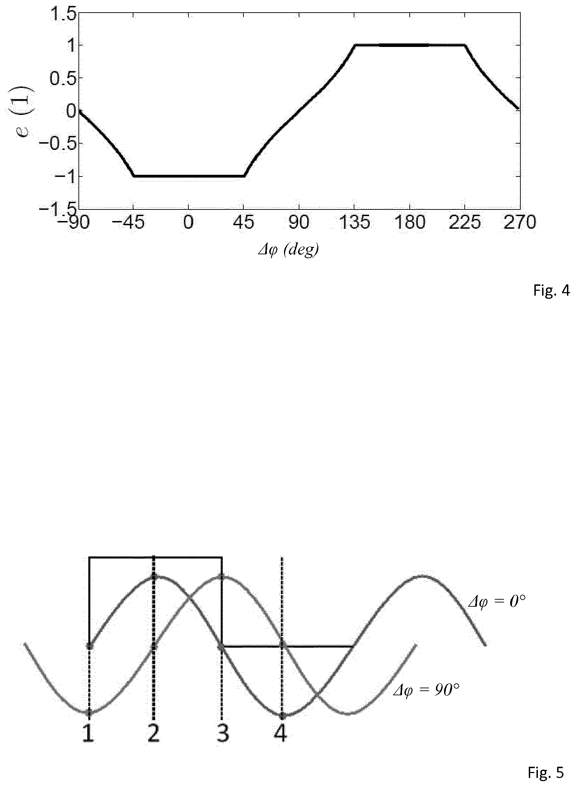

Da die Berechnung der aktuellen Phase mittels der Arkustangensfunktion sehr rechenintensiv ist, kann anstelle dieser Berechnung der Quotient aus dem Imaginärteil und Realteil als Regelabweichung verwendet werden. Die entsprechende Regelfunktion ist in Fig. 4 schematisch gezeichnet. Der Grundgedanke hinter dieser Vereinfachung besteht darin, dass bei einer Phasenverschiebung von 90° der Realteil Null wird. Folglich kann er zur Definition der Regelabweichung, bzw. zur Regelung der Phase, herangezogen werden. Als Regelabweichung wird entsprechend eine sogenannte Error-Funktion definiert, welche gegeben ist durch:

$$e = \frac{Re}{|Im|}.$$

Der Imaginärteil wird dabei ebenfalls in Betracht gezogen, weil der Realteil bei einer von 90° verschiedenen Phasenverschiebung von der Amplitude und damit auch vom Imaginärteil abhängt. Dass der Betrag des Imaginärteils verwendet wird, dient wiederum der Abdeckung eines maximalen Bereichs für die Phase. Es ist dabei von Vorteil, die Regelabweichung zu begrenzen, insbesondere auf +/-1. Man beachte, dass diese Definition für ein Cosinus-Signal gilt. Für ein Sinussignal muss, damit bei einer Phasenverschiebung von $\Delta\varphi$=90° gilt, dass e=0, die Error-Funktion invertiert werden. Die Einstellung der vorgebbaren Phasenverschiebung zwischen Anregesignal und Empfangssignal ist schließlich in Fig. 5 illustriert. Gezeigt sind zwei Anregesignale. Die schwarze Kurve weist eine Phase von $\varphi$=0°, die graue Kurve eine Phase von $\varphi$=90° auf. Zur Einstellung einer bestimmten vorgebbaren Phasenverschiebung wird also die Lage des Goertzel-Fensters in seiner Position verändert.

Nun ist es so, dass sich durch Einstellung einer Phasenverschiebung auch die Regelfunktion, welche eine Funktion der Phasenverschiebung $\Delta\varphi$ darstellt, verschiebt. Um auf eine von 90° verschiedene Phasenverschiebung regeln zu können muss demnach auch die gesamte Regelfunktion entlang der Abszisse analog verschoben werden, damit sich für die jeweils vorgebbare Phasenverschiebung e=0 ergibt.

Durch diese Möglichkeit, eine von 90° verschiedene Phasenverschiebung einstellen zu können, kann beispielsweise als Prozessgröße neben einem vorgegebenen Füllstand auch die Dichte des Mediums bestimmt werden. Weiterhin besteht die Option, zwischen zwei verschiedenen vorgebbaren Phasenverschiebungen hin und her zu wechseln. Dadurch kann neben der Dichte auch die Viskosität des Mediums bestimmt werden, welche sich aus dem Frequenzunterschied bei den beiden unterschiedlichen Phasenverschiebungen ergibt.

**Bezugszeichenliste**

| | |
|---|---|
| 1 | Vibronischer Sensor |
| 2 | Medium |
| 3 | Behälter |
| 4 | Schwingfähige Einheit |
| 5 | Elektromechanische Wandlereinheit |
| 6 | Elektronikeinheit |
| 7 | Sensoreinheit |

| 8 | Antialiasing-Filter bzw. Switched-Capacitor Filter |
| 9 | Mikroprozessor |
| 10 | Analog-Digital Wandler |
| 11 | Goertzel-Algorithmus |
| 12 | PI-Regler |
| 13 | digital gesteuerter Oszillator |
| 14 | Digital-Analog Wandler |
| 15 | Abtastwerte N=4 |
| 16 | Goertzel-Fenster |

| $U_A$ | Anregesignal |
| $U_E$ | Empangssignal |
| $f_k$ | Arbeitsfrequenz des Goertzel-Algorithmus |
| $f_S$ | Abtastfrequenz des Goertzel-Algorithmus |
| N | Anzahl der Abtastwerte des Goertzel-Algorithmus |
| $U_D$ | Störsignale |
| e | Regelabweichung |
| $\varphi$ | Phase |

**Patentansprüche**

1. Verfahren zur Bestimmung und/oder Überwachung mindestens einer Prozessgröße eines Mediums (2) mit zumindest einer schwingfähigen Einheit (4),

wobei die schwingfähige Einheit (4) mittels eines elektrischen Anregesignals ($U_A$) einer einstellbaren Frequenz zu mechanischen Schwingungen angeregt wird,
wobei die mechanischen Schwingungen in ein elektrisches Empfangssignal ($U_E$) umgewandelt werden, welches Empfangssignal ($U_E$) zumindest durch eine Frequenz und/oder eine Phase und/oder eine Amplitude charakterisiert ist,
wobei das Anregesignal ($U_A$) ausgehend vom Empfangssignal ($U_E$) erzeugt wird,
wobei die Spannungswerte des Empfangssignals ($U_E$) zu bestimmten vorgegebenen Zeitpunkten ausgehend vom Anregesignal ($U_A$) abgetastet werden,
wobei aus den abgetasteten Spannungswerten des Empfangssignals ($U_E$) mittels eines Goertzel Algorithmus der Realteil und Imaginärteil des Empfangssignals ($U_E$) ermittelt werden,
wobei für die Durchführung des Goertzel Algorithmus zumindest ein Goertzel Koeffizient, insbesondere die Anzahl der Abtastwerte (N) und/oder eine Arbeitsfrequenz ($f_K$) und/oder eine Abtastfrequenz ($f_S$) vorgegeben wird,
wobei aus dem Realteil und Imaginärteil des Empfangssignals ($U_E$) zumindest die aktuelle Phase und/oder die aktuelle Amplitude des Empfangssignals ($U_E$) errechnet werden,
wobei die Frequenz des Anregesignals ($U_A$) derart eingestellt wird, dass eine vorgebbare Phasenverschiebung ($\Delta\varphi$) zwischen Anregesignal

und Empfangssignal ($U_E$) vorliegt, und
wobei die mindestens eine Prozessgröße bestimmt wird.

2. Verfahren nach Anspruch 1,
wobei die Arbeitsfrequenz ($f_k$) auf die Frequenz des Anregesignals ($U_A$) eingestellt wird.

3. Verfahren nach Anspruch 1 oder 2,
wobei die Abtastfrequenz ($f_S$) auf ein ganzzahliges Vielfaches der Frequenz des Anregesignals ($U_A$) gewählt wird.

4. Verfahren nach einem der vorhergehenden Ansprüche,
wobei für die Anzahl der Abtastwerte (N) ein ganzzahliges Vielfaches einer Periode des Anregesignals ($U_A$) gewählt wird.

5. Verfahren nach Anspruch 3,
wobei als Abtastfrequenz ($f_S$) das Zweifache oder das Vierfache der Frequenz des Anregesignals ($U_A$) eingestellt wird.

6. Verfahren nach einem der vorhergehenden Ansprüche,
wobei der Goertzel-Algorithmus über mehrere Perioden des Anregesignals ($U_A$) durchgeführt wird.

7. Verfahren nach einem der vorhergehenden Ansprüche,
wobei das Anregesignal ($U_A$) ein Rechtecksignal oder ein Sinussignal ist.

8. Verfahren nach einem der vorhergehenden Ansprüche,
wobei die vorgebbare Phasenverschiebung ($\Delta\varphi$) anhand des Quotienten aus der Anzahl der Abtastwerte (N) und der Abtastfrequenz ($f_S$) mittels einer zeitlichen Verschiebung der Abtastwerte (N) in Bezug auf das Anregesignal ($U_A$) eingestellt wird.

9. Verfahren nach einem der vorhergehenden Ansprüche,
wobei die vorgebbare Phasenverschiebung ($\Delta\varphi$) 90° beträgt.

10. Verfahren nach einem der vorhergehenden Ansprüche,
wobei eine Messperiode zumindest in zwei Zeitintervalle unterteilt wird, wobei jeweils in einem ersten Zeitintervall eine erste vorgebbare Phasenverschiebung ($\Delta\varphi_1$) eingestellt wird, und in einem zweiten Zeitintervall eine zweite vorgebbare Phasenverschiebung ($\Delta\varphi_2$) eingestellt wird.

11. Verfahren nach einem der vorhergehenden Ansprüche,

wobei zur Einstellung der vorgebbare Phasenverschiebung ($\Delta\varphi$) eine durch den Quotienten des Realteils und des Betrags Imaginärteils des Empfangssignals ($U_E$) definierte Funktion (e) oder das Inverse dieser Funktion (e) für die Regelabweichung verwendet wird.

12. Verfahren nach Anspruch 11, wobei die Regelabweichung (e) beschränkt wird, insbesondere auf +/-1.

13. Vorrichtung zur Bestimmung und/oder Überwachung mindestens einer Prozessgröße eines Mediums (2) mit zumindest einer schwingfähigen Einheit (4),

> mit einer elektromechanischen Wandlereinheit (5) welche dazu ausgestaltet ist, die mechanisch schwingfähige Einheit (4) ausgehend von einem elektrischen Anregesignal ($U_A$) einer einstellbaren Frequenz zu mechanischen Schwingungen anzuregen,
> und die mechanischen Schwingungen zu empfangen und in ein elektrisches Empfangssignal ($U_E$) umwandelt, welches Empfangssignal ($U_E$) zumindest durch eine Frequenz und/oder eine Phase und/oder eine Amplitude charakterisiert ist,
> und mit einer Elektronikeinheit (6) mit einem Mikroprozessor (10), welche dazu ausgestaltet ist, dass sie ausgehend vom Empfangssignal ($U_E$) das elektrische Anregesignal ($U_A$) erzeugt, dass sie die Spannungswerte des Empfangssignals ($U_E$) zu bestimmten vorgegebenen Zeitpunkten abtastet, dass sie aus den abgetasteten Spannungswerten des Empfangssignals ($U_E$) mittels eines Goertzel Algorithmus der Realteil und Imaginärteil des Empfangssignals ($U_E$) ermittelt, wobei für die Durchführung des Goertzel Algorithmus zumindest ein Goertzel Koeffizient, insbesondere die Anzahl der Abtastwerte (N) und/oder eine Arbeitsfrequenz ($f_k$) und/oder eine Abtastfrequenz ($f_S$) vorgegeben ist, dass sie aus dem Realteil und Imaginärteil des Empfangssignals ($U_E$) zumindest die aktuelle Phase und/oder die aktuelle Amplitude des Empfangssignals ($U_E$) errechnet, und mit einer Regeleinheit (12), die dazu ausgestaltet ist, die Frequenz des Anregesignals ($U_A$) derart einzustellen, dass eine vorgebbare Phasenverschiebung ($\Delta\varphi$) zwischen Anregesignal ($U_A$) und Empfangssignal ($U_E$) vorliegt, und welche Elektronikeinheit (6) dazu ausgestaltet ist, die mindestens eine Prozessgröße zu bestimmen.

14. Vorrichtung nach Anspruch 13,

wobei der Mikroprozessor (10) ein Low-Power Mikroprozessor ist.

15. Vorrichtung nach Anspruch 13 oder 14, wobei ein Anti-Aliasingfilter (8), insbesondere ein adaptiver Switched-Capacitor-Filter, vorgesehen ist.

16. Vorrichtung nach einem der Ansprüche 13-15, wobei die mindestens eine Prozessgröße gegeben ist durch den Füllstand, die Dichte oder die Dichte des Mediums (2) in einem Behälter (3) oder durch den Durchfluss des Mediums (2) durch ein Rohr.

17. Vorrichtung nach einem der Ansprüche 13-16, wobei die elektromechanische Wandlereinheit (4) gegeben ist durch einen piezoelektrischen Antrieb oder einen elektromagnetischen Antrieb.

**Claims**

1. Procedure for determining and/or monitoring at least one process variable of a medium (2) with at least one unit capable of vibrating (4),

> wherein the unit capable of vibrating (4) is excited to produce mechanical vibrations using an electrical excitation signal ($U_A$) of a configurable frequency,
> wherein the mechanical vibrations are converted to an electrical reception signal ($U_E$), wherein said reception signal ($U_E$) is characterized at least by a frequency and/or a phase and/or an amplitude,
> wherein the excitation signal ($U_A$) is generated from the reception signal ($U_E$), wherein the voltage values of the reception signal ($U_E$) are scanned at certain predefined times on the basis of the excitation signal ($U_A$),
> wherein the real part and the imaginary part of the reception signal ($U_E$) are determined from the scanned voltage values of the reception signal ($U_E$) using a Goertzel algorithm,
> wherein at least a Goertzel coefficient, particularly the number of scan values (N) and/or a working frequency ($f_k$) and/or a scan frequency (fs) are predefined for the execution of the Goertzel algorithm,
> wherein at least the actual phase and/or the actual amplitude of the reception signal ($U_E$) are calculated from the real part and the imaginary part of the reception signal ($U_E$),
> wherein the frequency of the excitation signal ($U_A$) is regulated in such a way that a predefinable phase shift ($\Delta\varphi$) is present between the excitation signal and the reception signal ($U_E$), and wherein the at least one process variable is determined.

**2.** Procedure as claimed in Claim 1, wherein the working frequency ($f_k$) is regulated to the frequency of the excitation signal ($U_A$).

**3.** Procedure as claimed in Claim 1 or 2, wherein the scan frequency (fs) is selected for an integer multiple of the frequency of the excitation signal ($U_A$).

**4.** Procedure as claimed in one of the previous claims, wherein an integer multiple of a period of the excitation signal ($U_A$) is selected for the number of scan values (N).

**5.** Procedure as claimed in Claim 3, wherein the double or the quadruple of the frequency of the excitation signal ($U_A$) is set as the scan frequency (fs).

**6.** Procedure as claimed in one of the previous claims, wherein the Goertzel algorithm is executed over several periods of the excitation signal ($U_A$).

**7.** Procedure as claimed in one of the previous claims, wherein the excitation signal ($U_A$) is a rectangular signal or a sinusoidal signal.

**8.** Procedure as claimed in one of the previous claims, wherein the predefinable phase shift ($\Delta\varphi$) is set on the basis of the quotient from the number of scan values (N) and the scan frequency (fs) using a time shift of the scan values (N) with regard to the excitation signal ($U_A$).

**9.** Procedure as claimed in one of the previous claims, wherein the predefinable phase shift ($\Delta\varphi$) is 90°.

**10.** Procedure as claimed in one of the previous claims, wherein a measuring period is divided at least into two time intervals, a first predefinable phase shift ($\Delta\varphi_1$) being set in a first time interval, and a second predefinable phase shift ($\Delta\varphi_2$) being set in a second time interval.

**11.** Procedure as claimed in one of the previous claims, wherein, to set the predefinable phase shift ($\Delta\varphi$), a function (e) defined by the quotient of the real part and the value of the imaginary part of the reception signal ($U_E$), or the inverse of said function (e) is used for the control deviation.

**12.** Procedure as claimed in Claim 11, wherein the control deviation (e) is limited, particularly to +/- 1.

**13.** Apparatus designed to determine and/or monitor at least a process variable of a medium (2) with at least a unit capable of vibrating (4),

with an electromagnetic converter unit (5), which is designed to excite the unit capable of vibrating (4) to produce mechanical vibrations based on an electrical excitation signal ($U_A$) of an adjustable frequency, and to receive the mechanical vibrations and convert them to an electrical reception signal ($U_E$), said reception signal ($U_E$) being characterized at least by a frequency and/or a phase and/or an amplitude, and with an electronic unit (6) with a microprocessor (10), which is designed in such a way to generate the electrical excitation signal ($U_A$) on the basis of the reception signal ($U_E$), scan the voltage values of the reception signal ($U_E$) at certain predefined times, determine the real part and the imaginary part of the reception signal ($U_E$) from the scanned voltage values of the reception signal ($U_E$) using a Goertzel algorithm, wherein at least a Goertzel coefficient, particularly the number of the scan values (N) and/or a working frequency ($f_k$) and/or a scan frequency (fs) is predefined for the execution of the Goertzel algorithm, calculate at least the actual phase and/or the actual amplitude of the reception signal ($U_E$) from the real part and the imaginary part of the reception signal ($U_E$), and with a control unit (12), which is designed to set the frequency of the excitation signal ($U_A$) in such a way that a predefinable phase shift ($\Delta\varphi$) exists between the excitation signal ($U_A$) and the reception signal ($U_E$), and wherein said electronic unit (6) is designed to determine the at least one process variable.

**14.** Apparatus as claimed in Claim 13, wherein the microprocessor (10) is a low-power microprocessor.

**15.** Apparatus as claimed in Claim 13 or 14, wherein an anti-aliasing filter (8), particularly an adaptive switched capacity filter, is provided.

**16.** Apparatus as claimed in one of the Claims 13 to 15, wherein the at least one process variable constitutes the level or the density of the medium (2) in a vessel (3) or the flow of the medium (2) through a tube.

**17.** Apparatus as claimed in one of the Claims 13 to 16, wherein the electromagnetic converter unit (4) constitutes a piezoelectric drive or an electromagnetic drive.

**Revendications**

**1.** Procédé destiné à la détermination et/ou à la surveillance d'au moins une grandeur de process d'un produit (2) avec au moins une unité apte à vibrer (4),

l'unité apte à vibrer (4) étant excitée avec une fréquence réglable en vibrations mécaniques au moyen d'un signal d'excitation électrique ($U_A$), les vibrations mécaniques étant converties en un signal de réception électrique ($U_E$), lequel signal de réception ($U_E$) est caractérisé au moins par une fréquence et/ou une phase et/ou une amplitude,

le signal d'excitation ($U_A$) étant généré à partir du signal de réception ($U_E$), les valeurs de tension du signal de réception ($U_E$) étant échantillonnées à des instants prédéfinis déterminés, à partir du signal d'excitation ($U_A$),

la partie réelle et la partie imaginaire du signal de réception ($U_E$) étant déterminées à partir des valeurs de tension échantillonnées du signal de réception ($U_E$) au moyen d'un algorithme de Goertzel,

au moins un coefficient de Goertzel, notamment le nombre des valeurs d'échantillonnage (N) et/ou une fréquence de travail ($f_k$) et/ou une fréquence d'échantillonnage ($f_S$) étant prédéfinis pour l'exécution de l'algorithme de Goertzel,

au moins la phase actuelle et/ou l'amplitude actuelle du signal de réception ($U_E$) étant calculée(s) à partir de la partie réelle et de la partie imaginaire du signal de réception ($U_E$),

la fréquence du signal d'excitation ($U_A$) étant réglée de telle sorte qu'il existe un déphasage prédéfinissable ($\Delta\varphi$) entre le signal d'excitation et le signal de réception ($U_E$), et

l'au moins une grandeur de process étant déterminée.

2.  Procédé selon la revendication 1,
    pour lequel la fréquence de travail ($f_k$) est réglée à la fréquence du signal d'excitation ($U_A$).

3.  Procédé selon la revendication 1 ou 2,
    pour lequel on choisit, pour la fréquence d'échantillonnage ($f_S$), un multiple entier de la fréquence du signal d'excitation ($U_A$).

4.  Procédé selon l'une des revendications précédentes,
    pour lequel on choisit, pour le nombre de valeurs d'échantillonnage (N), un multiple entier d'une période du signal d'excitation ($U_A$).

5.  Procédé selon la revendication 3,
    pour lequel on règle, en tant que fréquence d'échantillonnage ($f_S$), le double ou le quadruple de la fréquence du signal d'excitation ($U_A$).

6.  Procédé selon l'une des revendications précédentes,
    pour lequel l'algorithme de Goertzel est exécuté sur plusieurs périodes du signal d'excitation ($U_A$).

7.  Procédé selon l'une des revendications précédentes,
    pour lequel le signal d'excitation ($U_A$) est un signal rectangulaire ou un signal sinusoïdal.

8.  Procédé selon l'une des revendications précédentes,
    pour lequel le déphasage prédéfinissable ($\Delta\varphi$) est réglé sur la base du quotient du nombre de valeurs d'échantillonnage (N) et de la fréquence d'échantillonnage ($f_S$) au moyen d'un déphasage dans le temps des valeurs d'échantillonnage (N) par rapport au signal d'excitation ($U_A$).

9.  Procédé selon l'une des revendications précédentes,
    pour lequel le déphasage prédéfinissable ($\Delta\varphi$) est de 90°.

10. Procédé selon l'une des revendications précédentes,
    pour lequel une période de mesure est divisée au moins en deux intervalles de temps, un premier déphasage prédéfinissable ($\Delta\varphi_1$) étant réglé dans un premier intervalle de temps, et un deuxième déphasage prédéfinissable ($\Delta\varphi_2$) étant réglé dans un deuxième intervalle de temps.

11. Procédé selon l'une des revendications précédentes,
    pour lequel, pour le réglage du déphasage prédéfinissable ($\Delta\varphi$), on utilise, pour l'écart de régulation, une fonction (e) définie par le quotient de la partie réelle et de la valeur de la partie imaginaire du signal de réception ($U_E$), ou l'inverse de cette fonction (e).

12. Procédé selon la revendication 11,
    pour lequel l'écart de régulation (e) est limité, notamment à +/- 1.

13. Dispositif destiné à la détermination et/ou à la surveillance d'au moins une grandeur de process d'un produit (2) avec au moins une unité apte à vibrer (4),

avec une unité de convertisseur électromécanique (5), laquelle est conçue de telle sorte à exciter, à une fréquence réglable, en vibrations mécaniques l'unité apte à vibrer (4) à partir d'un signal d'excitation électrique ($U_A$),

et à recevoir les vibrations mécaniques et à les convertir en un signal de réception électrique ($U_E$), lequel signal de réception ($U_E$) est caractérisé au moins par une fréquence et/ou une phase et/ou une amplitude,

et avec une unité électronique (6) avec un microprocesseur (10), laquelle est conçue de telle sorte à

générer le signal d'excitation électrique ($U_A$) à partir du signal de réception ($U_E$),

échantillonner les valeurs de tension du signal de réception ($U_E$) à des instants prédéfinis déterminés,

déterminer la partie réelle et la partie imaginaire du signal de réception ($U_E$) à partir des valeurs de tension échantillonnées du signal de réception ($U_E$) au moyen d'un algorithme de Goertzel,

au moins un coefficient de Goertzel, notamment le nombre des valeurs d'échantillonnage (N) et/ou une fréquence de travail ($f_k$) et/ou une fréquence d'échantillonnage ($f_S$) étant prédéfinis pour l'exécution de l'algorithme de Goertzel,

calculer au moins la phase actuelle et/ou l'amplitude actuelle du signal de réception ($U_E$) à partir de la partie réelle et de la partie imaginaire du signal de réception ($U_E$),

et avec une unité de régulation (12), laquelle est conçue pour régler la fréquence du signal d'excitation ($U_A$) de telle sorte qu'il existe un déphasage prédéfinissable ($\Delta\varphi$) entre le signal d'excitation ($U_A$) et le signal de réception ($U_E$),

et laquelle unité électronique (6) est conçue de telle sorte à déterminer l'au moins une grandeur de process.

**14.** Dispositif selon la revendication 13,
pour lequel le microprocesseur (10) est un microprocesseur basse consommation.

**15.** Dispositif selon la revendication 13 ou 14,
pour lequel est prévu un filtre antirepliement (8), notamment un filtre adaptatif à capacités commutées.

**16.** Dispositif selon l'une des revendications 13 à 15,
pour lequel, concernant l'au moins une grandeur de process, il s'agit du niveau ou de la densité du produit (2) dans un réservoir (3), ou du débit de produit (2) à travers un tube.

**17.** Dispositif selon l'une des revendications 13 à 16,
pour lequel l'unité de convertisseur électromécanique (4) est constituée d'un entraînement piézoélectrique ou d'un entraînement électromagnétique.

Fig. 1

Fig. 2

Fig. 3a

Fig. 3b

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009026685 A1
- DE 102009028022 A1
- DE 1020110075113 A1
- DE 00102010030982 A1
- DE 10201101667 A1
- DE 10203461 A1
- DE 69730416 T2
- DE 102004030740 A1
- DE 69723706 T2
- DE 00102010028303 A1

**In der Beschreibung aufgeführte Nicht-Patentliteratur**

- **VON D. CH. VON GRÜNINGEN.** Digitale Signalverarbeitung. Fachbuchverlag Leipzig, 2004